# EUROPEAN PATENT APPLICATION

(11) **EP 1 801 266 A1**
(43) Date of publication of application: **27.06.2007**
(21) Application number: 06126370.3
(22) Date of filing: 18.12.2006
(51) Int. Cl.: C25D 3/46, C25D 3/64, C25D 5/34, A01N 59/16

(54) **Method for the surface finishing of silver and its alloys**

(30) Priority: 21.12.2005 IT MI20052435
(71) Applicant: F.Lli Calegaro di Luigi di Francesco Calegaro S.P.A., 35033 Bresseo Di Teolo (Padova) (IT)
(72) Inventor: Fochesato, Antonio, 36015, SCHIO (Vicenza) (IT)
(74) Representative: De Gregori, Antonella

(57) **Abstract**

A method is described for the surface finishing or plating of silver and/or its alloys comprising the following passages:
- a washing pretreatment of a silver end-product to be subjected to finishing which comprises:
a) washing in an ultrasound bath with a frequency higher than 40,000 Hertz;
b) subsequent washing of the end-product in a bath containing a solution consisting of perchloroethylene and dichloropropane in a weight ratio ranging from 70/30 to 50/50;
c) washing in a bath with distilled water;

- immersion in a galvanic bath containing a solution of a metal belonging to groups 8, 9, 10 and 13 of the periodic table,
said method being characterized in that the immersion phase in a galvanic bath is effected applying a current intensity which varies from 10 to 25 A/m² for a time ranging from 50 to 80 seconds.

## Description

The present invention relates to a method for the surface finishing or plating of silver and its alloys.

In particular, the invention relates to a physico-chemical finishing method in an electrogalvanic bath which allows to realize a new surface finishing or plating of silver and its alloys.

The pretreatment phase of the physico-chemical finishing method in an electrogalvanic bath using metals of groups 8, 9, 10, 13 is described and claimed in Italian patent application No. MI2003A2218 filed in the name of F.lli Calegaro di Luigi S.p.A.

It has been known for some time that silver has bacteriostatic and bactericidal properties and there is a wide range of scientific reference literature in this respect, even if the way silver acts on bacteria has not as yet been fully explained.

There are however various scientific explanations in this respect, of which that which is held as being the most valid and acceptable by the scientific world is that, as a result of its particular electronic structure, silver creates an oxidation of the cell membrane of the bacterium and/or micro-organism. The action of silver against mildew and ferments has in fact been demonstrated.

This theory, widely supported by experimental tests, explains that in the surface structure of silver a wide empty space is available in which atomic oxygen (0⁺²) remains adsorbed. It is therefore this rising oxygen (extremely reactive) which reacts with the cellular membrane of bacteria causing the oxidation of the membrane itself and consequently the deactivation of the microorganism. It has also been demonstrated that silver ions block the capacity of bacteria of forming the chemical bonds necessary for their survival.

Experiments effected using a SEM microscope have in fact shown that silver ions react with the cell walls, destroying their integrity. This allows the silver ions to reach the nucleus of the cell and also react with the cellular nucleus. At this point, the bacterium stops functioning.

It has been recognized however that silver has bactericidal capacities against anaerobic bacteria whereas its action against aerobic bacteria is non-existent or limited.

An objective of the present invention is therefore to solve the problems described above by means of a new finishing method which allows the drawbacks of the known art to be overcome.

A particular finishing method has in fact been surprisingly found which allows the production of silver and its alloys having a bactericidal capacity from 2 to 3 times higher than that of pure silver, depending on the bacterial strain tested.

Furthermore, the silver and its alloys subjected to the finishing method according to the present invention also very surprisingly have a high bacteriostatic and bactericidal capacity against aerobic bacteria.

An object of the present invention therefore relates to a surface finishing or plating method of silver and/or its alloys comprising the following steps:
- a washing pretreatment of a silver end-product to be subjected to finishing which comprises:
   a) washing in an ultrasound bath with a frequency higher than 40,000 Hertz;
   b) subsequent washing of the end-product in a bath containing a solution consisting of perchloroethylene and dichloropropane in a weight ratio ranging from 70/30 to 50/50;
   c) washing in a bath with distilled water;
- immersion in a galvanic bath containing a solution of a metal belonging to groups 8, 9, 10 and 13 of the periodic table,
said method being characterized in that the immersion phase in a galvanic bath is effected applying a current intensity which varies from 10 to 25 A/m² for a time ranging from 50 to 80 seconds.

The perchloroethylene/dichloropropane ratio is preferably equal to 60/40.

In particular, the metal belonging to Groups 8, 9, 10 and 13 is selected from rhodium, palladium, osmium, ruthenium and indium. The metal is even more preferably rhodium.

Phase a) of the washing pretreatment is effected for a time ranging from 60 to 120 seconds, at a temperature ranging from 20 to 60°C.

Phase b) of the washing pretreatment is effected for a time ranging from 30 to 150 seconds, at a temperature ranging from 20 to 60°C.

Phase c) of the washing pretreatment is effected for a time ranging from 30 to 120 seconds, at a temperature ranging from 20 to 60°C.

A further object of the present invention relates to an end-product made of silver or its alloys, surface finished or plated by means of the method according to the present invention.

An object of the present invention is consequently also the use of said end-product as a bacteriostatic and/or bactericidal agent against bacteria and/or microorganisms, in particular against aerobic and/or anaerobic bacteria, preferably aerobic or against mildew and ferments.

The main advantage of the method according to the present invention consists in the fact that it allows end-products made of silver and its alloys to be obtained, i.e. silver having a titer of 1000, 925 and 800, which, as a result of the particular surface finishing have a particular bactericidal capacity which is from 2 to 3 times higher than the bactericidal capacities of pure silver, depending on the bacterial strain tested.

A further advantage of the method according to the present invention consists in the fact that silver, when subjected to this particular finishing treatment, acts against bacterial strains of the aerobic type normally having a low sensitivity towards oxidation.

The finishing treatment according to the present invention has therefore surprisingly allowed new and uncommon effects to be obtained, modifying the bactericidal capacities of silver and its alloys: the bactericidal effect is in fact much higher with respect to pure silver (titer 999-1000).

This modified silver, moreover, also has a high bacteriostatic and bactericidal capacity against aerobic bacteria and this demonstrates that the surface modification enables silver to act against bacterial strains of the aerobic type normally having a low sensitivity towards oxidation; the metal used in the galvanic bath, for example rhodium, can act as a catalyst for adverse reactions with respect to bacteria.

The pretreatment washing phase of the end-product is an essential phase for obtaining a perfect silver plating. In the method according to the present invention, the washing is effected in three phases with:
a) an ultrasound bath with a frequency higher than 40,000 Hertz which effects a first removal of the particles forming the "dirt" deposited on the surface of the metal;
b) a bath in a solution of perchloroethylene/dichloropropane for the definite removal of the dirty particles;
c) a bath with distilled water for the washing of the degreasing solution so that there is no minimum trace of products containing chlorine on the surface of the metal.

The selection of the electrodes in the electrogalvanic bath is also important for obtaining a plated end-product with optimum characteristics.

In particular, for finishing or plating with rhodium, it has been observed that the use of platinized niobium electrodes allows better results to be obtained in terms of yield and finishing quality with respect to the use of platinized titanium electrodes. Niobium electrodes allow a better equalization of the cathode/anode current to be obtained with respect to titanium electrodes.

The same electrodes are also used in plating with palladium. For plating with ruthenium and indium, the best electrodes have proved to be those consisting of a mixture of oxides, in particular a mixture of iridium dioxide and tantalum pentoxide (mixed oxides), coated with titanium which are preferred for the lower oxidation potential with respect to electrodes coated with platinum.

For the finishing of silver with rhodium, an electrogalvanic bath modified with platinum electrodes coated with niobium, is used. The solution used consists of rhodium sulfate or rhodium phosphate in a solution of phosphoric acid or sulfuric acid.

The concentration of the metal varies from 0.8 to 5.0 g/l, whereas the concentration of acids varies from 25 to 50 ml/l.

The intensity of the current applied varies from 10 to 25 A/m² for a time ranging from 50 to 80 seconds. The thickness of the plating varies from 0.05 to 1.5 microns.

Some examples are now provided for illustrative and non-limiting purposes of the present invention.

### EXAMPLE 1

### SILVER plating with RHODIUM

The end-product to be subjected to finishing (for example a plate) is subjected to washing pretreatment which comprises: washing in an ultrasound bath with a frequency higher than 40,000 Hertz which effects a first removal of the particles forming the "dirt" deposited on the surface of the metal for a time of about 60 seconds, at a temperature of about 25°C; a subsequent bath in a solution of perchloroethylene/dichloropropane 60/40 for the definite removal of the dirt particles for a time of about 30 seconds, at a temperature of about 30°C; finally a bath with distilled water for washing the degreasing solution so that there is no minimum trace of products containing chlorine on the surface of the metal for a time of about 30 seconds, at a temperature of about 40°C, this is followed by the plating treatment.

A solution was prepared containing, as plating agent, rhodium III sulfate Rh₂(SO₄)₃ in a solution of H₂SO₄, with a concentration ranging from 0.8 to 5 g/l of rhodium sulfate - H₂SO₄.

In particular, in the present example, a solution was prepared consisting of 1 g/l of rhodium III sulfate in a ratio of 1:50 (1 part by weight of rhodium for every 50 parts by weight of H₂SO₄) to which a further 15% of sulfuric acid at 23°C was added.

The electrodes are made of platinum coated with niobium (niobized platinum).

The duration of the process is 60 seconds with a current equal to 15 A/m². The thickness of the rhodium deposited on the silver is 1.2 microns.

Cathode efficiency >90%

The deposition of the rhodium onto the silver is perfect, without stains, smudges and false reflexes.

The plate subjected to finishing treatment with rhodium of example 1 was then tested to verify the bactericidal activity with respect to different bacterial strains.

Some laboratory tests are described for illustrative purposes, carried out in vitro according to the standard regulation in force which envisages the use of ATCC bacterial strains.

The tests were effected with the Kirby-Bauer method (ASTM G-21, ASTM G-22, AATCC method 100, AATCC method 147). The bacteriostatic and bactericidal efficiency degree was obtained by measuring the diameter of the inhibition halo generated by the plate itself.

The diameter of the inhibition halo does not comprise the thickness of the metallic plates used equal to 0.9 mm. The plates were inserted vertically into the culture medium, after spreading the already prepared subculture onto the medium.

The measuring was effected after 24 hours.

### EXAMPLE 2

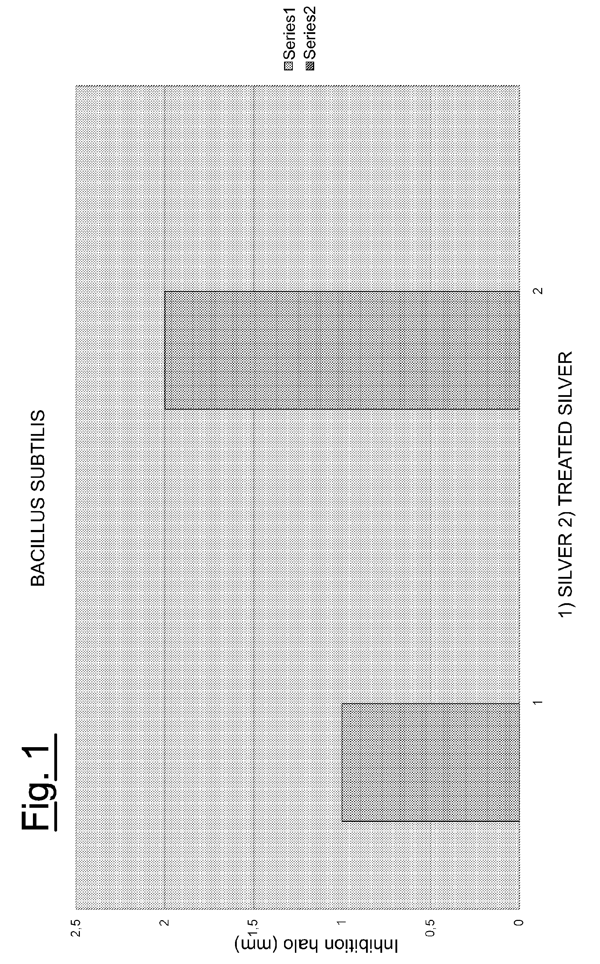

The plate, subjected to the finishing treatment according to example 1, having a thickness equal to 0.9 mm, was inserted vertically into the culture medium, after spreading the already prepared subculture of Bacillus subtilis (aerobic) ATCC 35946 onto the medium. The inhibition halo was measured after 24 hours and the results obtained, indicated below, are represented in the graph of figure 1. The results obtained were compared with a silver plate not subjected to treatment according to the present invention and a plate treated according to the finishing method of example 1.

### BACTERIAL STRAIN: Bacillus subtilis (aerobic) - Agar-Agar culture medium

### INHIBITION HALO

| Silver | Treated silver |
|---|---|
| 1 mm | 2 mm |

### EXAMPLE 3

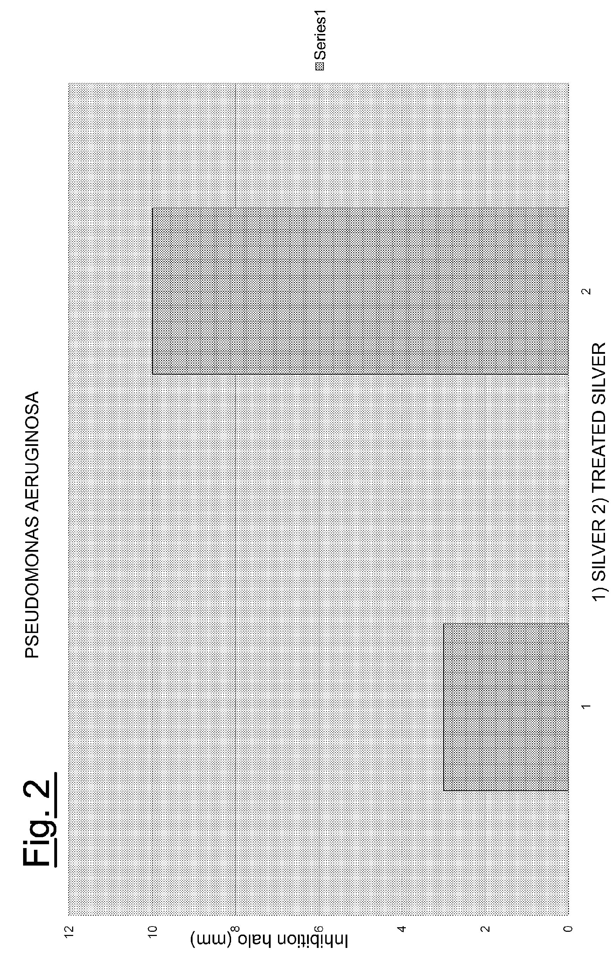

The plate, subjected to the finishing treatment according to example 1, having a thickness equal to 0.9 mm, was inserted vertically into the culture medium, after spreading the already prepared subculture of Pseudomonas aeruginosa (aerobic) ATCC 27853 onto the medium. The inhibition halo was measured after 24 hours and the results obtained, indicated below, are represented in the graph of figure 2. The results obtained were compared with a silver plate not subjected to treatment according to the present invention and a plate treated according to the finishing method of example 1.

### BACTERIAL STRAIN: Pseudomonas aeruginosa (aerobic) - Agar-Agar culture medium

### INHIBITION HALO

| Silver | Treated silver |
|---|---|
| 3 mm | 10 mm |

### EXAMPLE 4

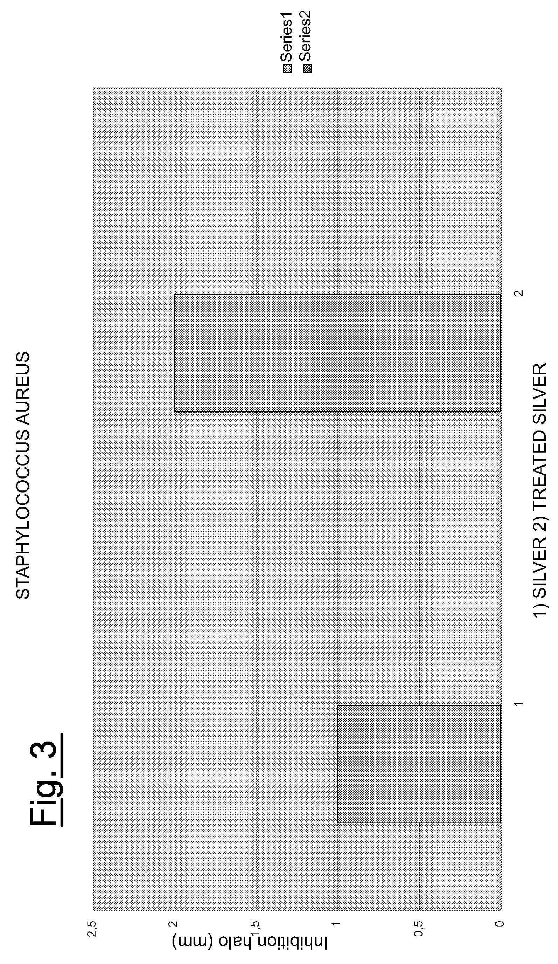

The plate, subjected to the finishing treatment according to example 1, having a thickness equal to 0.9 mm, was inserted vertically into the culture medium, after spreading the already prepared subculture of Staphylococcus aureus (aerobic) ATCC 29213 onto the medium. The inhibition halo was measured after 24 hours and the results obtained, indicated below, are represented in the graph of figure 3. The results obtained were compared with a silver plate not subjected to treatment according to the present invention and a plate treated according to the finishing method of example 1.

### BACTERIAL STRAIN: Staphylococcus aureus (aerobic) - Agar-Agar culture medium

### INHIBITION HALO

| Silver | Treated silver |
|---|---|
| 1 mm | 2 mm |

It is evident that the surface treatment with rhodium according to the present invention increases from 2 to 3 times the bactericidal efficiency of the silver plate treated against aerobic bacteria.

### EXAMPLE 5

### SILVER plating with RUTHENIUM

The end-product to be subjected to finishing (for example a plate) is subjected to washing pretreatment according to a procedure analogous to that indicated in example 1 and the plating treatment is then effected.

Ruthenium chloride soluble in water RuCl₃ x H₂O in the form of a solution containing 25% of ruthenium chloride, is used as plating agent.

Process temperature 40°C.

Duration of the process 60 seconds with a current intensity of 15 A/m².

The thickness of the ruthenium layer deposited is 1.25 microns.

Cathode efficiency > 25%.

The deposition of ruthenium on the silver is perfect, without stains, smudges and false reflexes.

Analogously to the plate subjected to finishing treatment with rhodium of example 1, the plate subjected to finishing treatment with ruthenium according to example 5 was also tested to verify the bactericidal activity with respect to the various bacterial strains, completely analogously too what is described in the previous examples 2-4.

### EXAMPLE 6

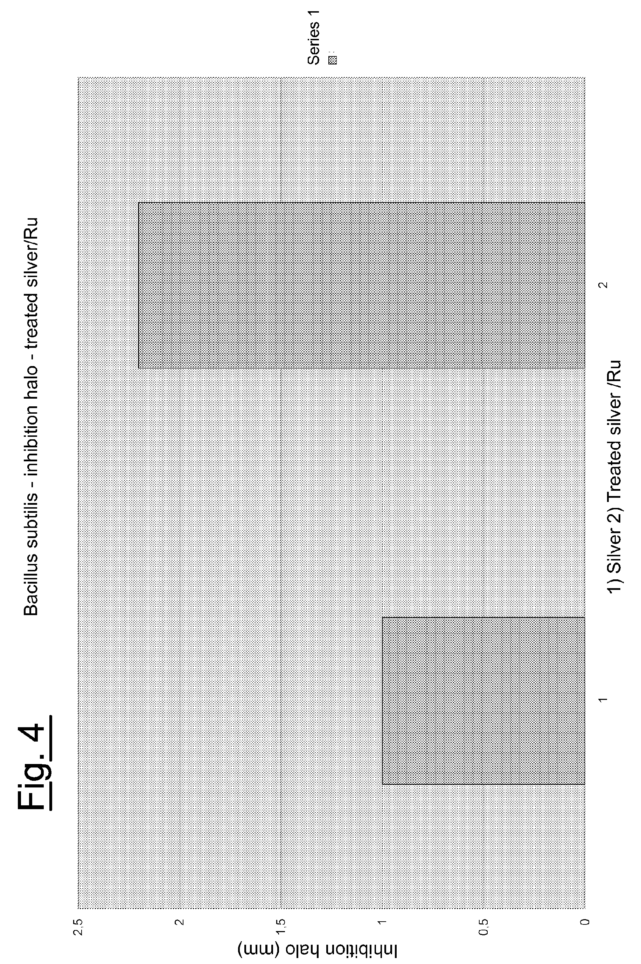

The plate, subjected to the finishing treatment according to example 5, having a thickness equal to 0.9 mm, was inserted vertically into the culture medium, after spreading the already prepared subculture of Bacillus subtilis (aerobic) ATCC 35946 onto the medium. The inhibition halo was measured after 24 hours and the results obtained, indicated below, are represented in the graph of figure 4. The results obtained were compared with a silver plate not subjected to treatment according to the present invention and a plate treated according to the finishing method of example 5.

### BACTERIAL STRAIN: Bacillus subtilis (aerobic) - Agar-Agar culture medium

### INHIBITION HALO

| Silver | Treated silver |
|---|---|
| 1 mm | 2.2 mm |

### EXAMPLE 7

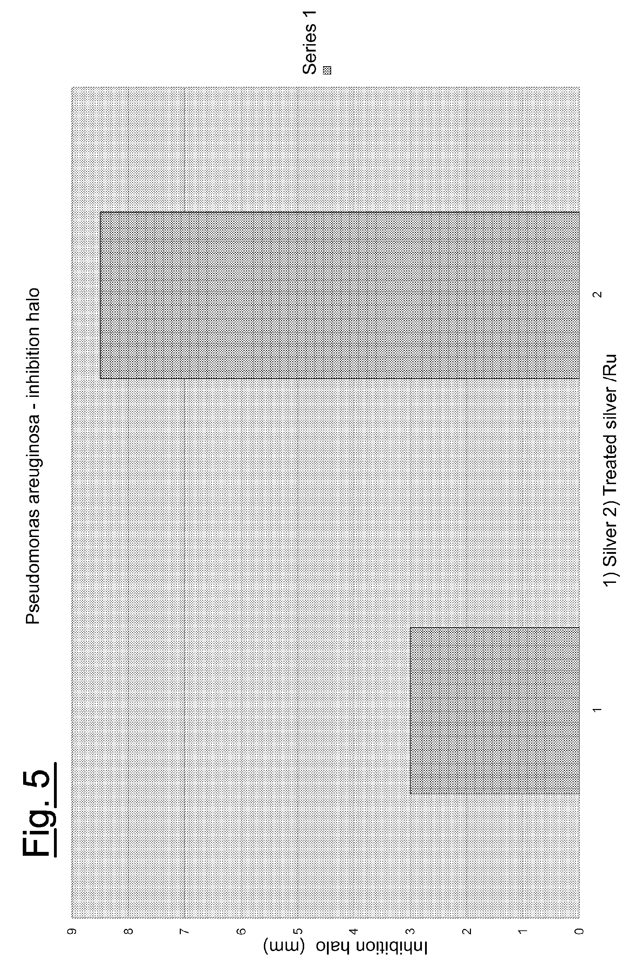

The plate, subjected to the finishing treatment according to example 5, having a thickness equal to 0.9 mm, was inserted vertically into the culture medium, after spreading the already prepared subculture of Pseudomonas aeruginosa (aerobic) ATCC 27853 onto the medium. The inhibition halo was measured after 24 hours and the results obtained, indicated below, are represented in the graph of figure 5. The results obtained were compared with a silver plate not subjected to treatment according to the present invention and a plate treated according to the finishing method of example 5.

### BACTERIAL STRAIN: Pseudomonas aeruginosa (aerobic) - Agar-Agar culture medium

### INHIBITION HALO

| Silver | Treated silver |
|---|---|
| 3 mm | 8.5 mm |

### EXAMPLE 8

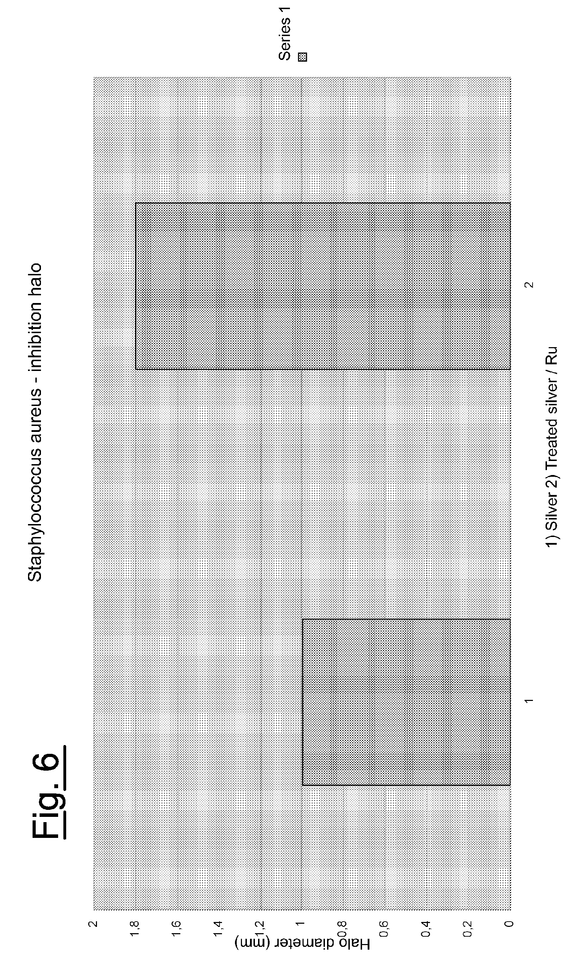

The plate, subjected to the finishing treatment according to example 5, having a thickness equal to 0.9 mm, was inserted vertically into the culture medium, after spreading the already prepared subculture of Staphylococcus aureus (aerobic) ATCC 29213 onto the medium. The inhibition halo was measured after 24 hours and the results obtained, indicated below, are represented in the graph of figure 6. The results obtained were compared with a silver plate not subjected to treatment according to the present invention and a plate treated according to the finishing method of example 5.

### BACTERIAL STRAIN: Staphylococcus aureus (aerobic) - Agar-Agar culture medium

### INHIBITION HALO

| Silver | Treated silver |
|---|---|
| 1 mm | 1.8 mm |

It is evident that the surface treatment with ruthenium according to the present invention considerably increases the bactericidal efficiency of the silver plate treated with respect to aerobic bacteria.

## Claims

1. A surface finishing or plating method of silver and/or its alloys comprising the following passages:
- a washing pretreatment of a silver end-product to be subjected to finishing which comprises:
a) washing in an ultrasound bath with a frequency higher than 40,000 Hertz;
b) subsequent washing of the end-product in a bath containing a solution consisting of perchloroethylene and dichloropropane in a weight ratio ranging from 70/30 to 50/50;
c) washing in a bath with distilled water;
- immersion in a galvanic bath containing a solution of a metal belonging to groups 8, 9, 10 and 13 of the periodic table,
said method being **characterized in that** the immersion phase in a galvanic bath is effected applying a current intensity which varies from 10 to 25 A/m² for a time ranging from 50 to 80 seconds.

2. The method according to claim 1, **characterized in that** the perchloroethylene/dichloropropane ratio is equal to 60/40.

3. The method according to claim 1, **characterized in that** the metal is selected from rhodium, palladium, osmium, ruthenium and indium.

4. The method according to claim 1, **characterized in that** the metal is rhodium.

5. The method according to claim 1, **characterized in that** the washing pretreatment phase a) is effected for a time ranging from 60 to 120 seconds, at a temperature ranging from 20 to 60°C.

6. The method according to claim 1, **characterized in that** the washing pretreatment phase b) is effected for a time ranging from 30 to 150 seconds, at a temperature ranging from 20 to 60°C.

7. The method according to claim 1, **characterized in that** the washing pretreatment phase c) is effected for a time ranging from 30 to 120 seconds, at a temperature ranging from 20 to 60°C.

8. The method according to claim 1, **characterized in that** the end-product to be finished is immersed in a galvanic bath having platinum electrodes coated with niobium and the solution used consists of rhodium sulfate or rhodium phosphate in a solution of sulfuric acid or phosphoric acid.

9. The method according to claim 8, **characterized in that** the concentration of rhodium varies from 0.8 to 5.0 g/l, whereas the concentration of the acid varies from 25 to 50 ml/l.

10. An end-product made of silver or its alloys surface finished or plated in accordance with the method according to one of the claims from 1 to 9.

11. Use of the end-product according to claim 10, as bacteriostatic and/or bactericidal agent against bacteria and/or micro-organisms.

12. Use according to claim 11, wherein the bacteria are aerobic and/or anaerobic.

13. Use according to claim 12, wherein the bacteria are aerobic.

14. Use according to claim 11, wherein the micro-organisms are mildew and ferments.
